# EUROPÄISCHE PATENTSCHRIFT

(11) **EP 3 105 000 B1**
(45) Veröffentlichungstag und Bekanntmachung des Hinweises auf die Patenterteilung: **03.04.2019**
(21) Anmeldenummer: 15703573.4
(22) Anmeldetag: 09.02.2015
(51) Int. Cl.: B23K 10/00, H05H 1/36, B23K 9/10

(54) **PLASMASCHNEIDMASCHINE MIT SCHUTZEINRICHTUNG SOWIE VERFAHREN ZUM BETREIBEN DER PLASMASCHNEIDMASCHINE**
PLASMA CUTTING MACHINE COMPRISING A PROTECTION DEVICE, AND A METHOD FOR OPERATING SAID PLASMA CUTTING MACHINE
MACHINE DE DÉCOUPE PAR PLASMA AVEC SYSTÈME DE PROTECTION AINSI QUE PROCÉDÉ D'EXPLOITATION DE LA MACHINE DE DÉCOUPE PAR PLASMA

(30) Priorität: 12.02.2014 DE 102014101719
(43) Veröffentlichungstag der Anmeldung: 21.12.2016
(73) Patentinhaber: Messer Cutting Systems GmbH, 64823 Gross-Umstadt (DE)
(72) Erfinder: GIEZEWSKI, Dieter, 64711 Erbach (DE)
(74) Vertreter: Staudt, Armin Walter
(86) Internationale Anmeldenummer: PCT/EP2015/052591
(87) Internationale Veröffentlichungsnummer: WO 2015/121186

(56) Entgegenhaltungen:
- EP-A1- 0 568 920
- CA-C- 2 241 145
- DE-A1- 19 518 182

## Beschreibung

### Technischer Hintergrund

Die vorliegende Erfindung betrifft eine Plasmaschneidmaschine mit
(a) einem mittels einer Bewegungseinheit bewegbaren Plasmabrenner,
(b) einem auf niedrigem Spannungsniveau ansteuerbaren Abstandssensor mit einer elektronischen Steuereinheit zur Ermittlung des Abstandes zwischen einem zu bearbeitenden Werkstück und dem Plasmabrenner,
(c) einer auf hohem Spannungsniveau ansteuerbaren Zündeinrichtung mittels der ein Zündvorgang auslösbar ist
(d) sowie einer mit dem Plasmabrenner bewegten Schutzeinrichtung zum Schutz der elektronischen Steuereinheit gegen aus dem Zündvorgang resultierender Störspannung,

Außerdem betrifft die Erfindung ein Verfahren zum Betreiben einer Plasmaschneidmaschine.

### Stand der Technik

Bei der thermischen Materialbearbeitung ist zur Gewährleistung einer hohen Qualität von Schweiß- und Schneidarbeiten an Werkstücken eine exakte Prozessführung unumgänglich. Ein wichtiger Parameter ist dabei der Arbeitsabstand zwischen dem Bearbeitungswerkzeug und dem Werkstück. In der Praxis übliche Abstandsmess- und regeleinrichtungen beruhen auf induktiver oder kapazitiver Messwerterfassung.

Bei einem als "Erstwertfindung" bekannten Messprinzip ist vorgesehen, den Plasmabrenner kurzzeitig in Kontakt mit der Werkstück-Oberfläche zu bringen, um einen reproduzierbaren und verlässlichen Referenzwert für die Abstandsregelung zu erhalten. Der Kontakt wird als elektrisches Strom-/Spannungssignal von einem elektronischen Sensor erfasst, der üblicherweise zusammen mit der Abstands-Regeleinrichtung einer zentralen Maschinensteuerung in einem Schaltschrank untergebracht ist. Nach der Erstwertfindung wird der Plasmabrenner in eine von der Werkstück-Oberfläche entfernte Ausgangsposition wegbewegt, und der Zündvorgang wird eingeleitet.

Zu diesem Zweck ist eine auf hohem Spannungsniveau ansteuerbare Zündeinrichtung vorgesehen, mittels derer zwischen einer Hilfselektrode und dem Werkstück ein Plasma-Lichtbogen ausgelöst wird. Die Zündspannung kann dabei bis zu 20 kV betragen. Dabei erzeugte Störspannungen (im Folgenden auch als "Transienten" bezeichnet) sowie hochfrequente Anteile davon können in Bauelemente der elektronischen Steuereinheit übergekoppelt werden und zu Beschädigungen oder zu Störungen führen.

Die CA 2 241 145 A1 beschreibt eine Stromversorgung für Plasmaschneid- und - schweißmaschinen mit einer Schutzschaltung. Die Schutzschaltung umfasst einen Thermistor, der in Reihe zwischen einer eigentlichen Spannungsquelle und der Stromversorgungseinheit geschaltet ist, und der im Fall einer Überspannung seinen elektrischen Widerstand erhöht, so dass die Stromversorgungseinheit spannungsfrei wird.

Die EP 0 568 920 A1 beschreibt einen induktiv gekoppelten Plasmagenerator zum Erzeugen eines Plasmas zur Verwendung in analytischen Geräten, beispielsweise in Atomemissions- oder Massenspektrometern. Als Hochfrequenzoszillator zur Erzeugung des Plasmas dient eine Vakuum-Triodenröhre. Zur Einstellung und Steuerung der Ausgangsleistung des Hochfrequenzoszillators wird eine Rückkoppelungsschaltung eingesetzt, die einen für die anliegende HF-Ausgangsleistung repräsentativen Ausgang umfasst. Der Zustand des Plasmas wird fortlaufend überwacht, indem der Zustand der Schaltkreisparameter erfasst wird, um eine Beschädigung zu verhindern, die durch eine Nichtzündung oder eine ungenügende Zündung des Plasmas hervorgerufen wird.

In der DE 195 18 182 A1, aus der eine Plasmaschneidmaschine und ein Betriebsverfahren gemäß der eingangs genannten Gattung bekannt sind, wird zur Begrenzung dieser Gefahr folgende elektrische Schutzeinrichtung vorgeschlagen.

Der Plasmabrenner ist mittels eines Positionier-Antriebes auf das zu bearbeitende Werkstück zu und von diesem weg vertikal verfahrbar. Als Abstandssensor dient ein Messkondensator, dessen eine Elektrode durch das Werkstück selbst gebildet ist und dessen andere Elektrode als Ringelektrode ausgebildet ist, die mit dem Plasmabrenner mechanisch fest verbunden ist und dessen Bewegungen mit ausführt. Die mit dem Abstand des Plasmabrenners vom Werkstück variierende Kapazität des Messkondensators wird mittels Hochfrequenz-Messbrückenstufe einer Steuereinheit kontinuierlich erfasst und für die Abstandsregelung verwendet.

Für die Zündung des Plasma-Lichtbogens ist eine auf hohem Spannungsniveau ansteuerbare Zündeinrichtung vorgesehen, mittels der zunächst ein Zünd-Lichtbogen zwischen einer Hilfselektrode und dem Werkstück auslösbar ist. Die elektrische Schutzeinrichtung zum Schutz gegen Überspannung umfasst eine Funkenstrecke und eine Glimmröhre. Letztere ist zwischen die Elektroden des Messkondensators geschaltet und die Funkenstrecke zwischen die Ringelektrode des Messkondensators und dessen durch das Werkstück gebildete Festelektrode. Die Funkenstrecke ist in einem blockförmigen Kunststoffgehäuse untergebracht, das am Brennerschaft montiert ist und daher die Bewegungen des Plasmabrenners mit ausführt.

Die Durchschlagspannung der Funkenstrecke ist niedriger als die Grenzspannung, der die elektronische Steuereinheit auch bei permanentem Anstehen an ihrem Nutzsignaleingang standhält, aber sie ist signifikant höher als der maximale Pegel eines über den Kondensator geleiteten Wechselspannungs-Nutzsignals. Dadurch sollen auch dann, wenn beim Zünden des Zünd-Lichtbogens ein Überschlag zwischen der Hilfselektrode der Zündeinrichtung und der Ringelektrode des Messkondensators stattfinden sollte, Beeinträchtigungen der elektronischen Steuereinheit vermieden werden.

### Technische Aufgabenstellung

Bei der bekannten Plasmaschneidmaschine befindet sich die Schutzeinrichtung in Form der Funkenstrecke in unmittelbarer Nähe des Plasmabrenners. Die elektronische Steuereinheit für die Abstandsregelung ist in sicherer Entfernung vom eigentlichen Plasma-Schneidprozess untergebracht, beispielsweise in einem neben der Maschine installierten Schaltschrank, der die zentrale Maschinensteuerung beherbergt. Von dort erfolgt auch die Steuerung zum Zünden des Lichtbogens.

Die von der Messelektrode kommende Nutzsignalleitung ist als abgeschirmte Koaxleitung ausgeführt. Auf der Verlegungsstrecke vom eigentlichen Messort bis zur Steuereinheit können sich die Hochspannung führende Leitung und die Nutzsignalleitung jedoch nahe kommen, beispielsweise in einem so genannten Schlauchpaket, in dem eine Vielzahl von Leitungen auf engem Raum zusammengefasst sind und das mehrere Meter lang sein kann. Dabei kann es trotz Abschirmung zu Überschlägen und Einkopplung von Störspannungen in die Nutzsignalleitung kommen. In dieser Hinsicht sind insbesondere Bussysteme empfindlich, die aber in Plasmaschneidmaschinen zunehmend für eine schnelle Datenübertragung eingesetzt werden.

Darüber hinaus reagieren die bei der bekannten Vorrichtung eingesetzten elektrischen Bauteile zur Überspannungsbegrenzung, also Glimmröhre und Funkenstrecke, relativ träge, so dass insbesondere Überkopplungen hochfrequenter Spannungsanteile aus der Hochspannungsleitung in die Nutzsignalleitung nicht ausgeschlossen werden können.

Der Erfindung liegt daher die Aufgabe zugrunde, eine Plasmaschneidmaschine bereit zu stellen, die hohen Anforderungen an die Störfestigkeit und Betriebssicherheit genügt.

Weiterhin liegt der Erfindung die Aufgabe zugrunde, ein für die Plasmaschneidmaschine geeignetes Betriebsverfahren anzugeben, das verlässlich die Überkopplung von Störsignalen in die zentrale Steuereinheit vermeidet.

### Allgemeine Beschreibung der Erfindung

Hinsichtlich der Plasmaschneidmaschine wird diese Aufgabe ausgehend von einer Maschine der eingangs genannten Gattung erfindungsgemäß dadurch gelöst, dass die Schutzeinrichtung eine elektronische Schaltung beinhaltet, die die elektronische Steuereinheit für den Abstandssensor, einen mehrere Schutzstufen umfassenden Schutzschalter zum Abbau der Störspannung sowie eine Schnittstelle zu einer Maschinensteuerung aufweist.

Bei der erfindungsgemäßen Plasmaschneidmaschine ist die Schutzeinrichtung als elektronische Schaltung ausgeführt, die neben mehreren Schutzstufen zum Abbau von Störspannung auch die elektronische Steuereinheit für den Abstandssensor umfasst. Elektronische Steuereinheit und Schutzeinrichtung sind im einfachsten Fall in einem gemeinsamen Gehäuse untergebracht.

Wie auch bei der bekannten Vorrichtung ist die Schutzeinrichtung der eigentlichen Maschinensteuerung vorgelagert und in unmittelbarer Nähe des Plasmabrenners derart angeordnet, dass sie zusammen mit diesem bewegt wird, das heißt, die Bewegungen des Plasmabrenners mitvollzieht.

Die Schutzeinrichtung enthält mehrere Schutzstufen zum Abbau von Hochspannungs-Überschlägen und zum Beseitigen hochfrequenter Spannungssignale, die aufgrund ihrer Frequenz Störpotential entfalten. Zur elektrischen Verbindung mit der Maschinensteuerung ist die Schutzeinrichtung mit einer Schnittstelle versehen, über die etwaige Nutzsignale zur Maschinensteuerung weitergeführt werden.

Die Schutzeinrichtung beinhaltet aber nicht nur den besagten Schutzschalter zum Abbau hochfrequenter, aus dem Zündungsvorgang resultierender Spannungsspitzen, sondern - im Unterschied zum Stand der Technik - auch die elektronische Steuereinheit für den Abstandssensor. Dies ermöglicht es, die Erstwertfindung, die laufende Abstandsmessung als auch die Auswertung und Abstandsregelung (im Folgenden insgesamt auch als "Sensor-Elektronik" bezeichnet) vollständig innerhalb der Schutzeinrichtung abzuschließen, also am Plasmabrenner oder in der Nähe desselben. Durch diese dezentrale, brennernahe Anordnung der Sensor-Elektronik ergeben sich mehrere Vorteile:
(1) Der Signalweg von Messdaten zwischen der Messstelle und der Sensor-Elektronik ist kurz. Dies trägt zu einer schnelleren Datenübertragung und zu höheren Messgenauigkeit bei.
(2) Die Weiterleitung von Daten der Abstandsmessung und -regelung zur zentralen Maschinensteuerung kann unterbleiben, so dass eine Störung durch Einkopplung von Überspannung in die Maschinensteuerung insoweit ausgeschlossen ist.
(3) Die Länge der eventuell Hochspannung führenden Messleitung kann auf ein Minimum reduziert werden, was das Störpotential verringert und die Betriebssicherheit und die Prozessqualität verbessert.
(4) Darüber hinaus können Kosten und Montagezeiten reduziert werden.

Die einzelnen Stufen des Schutzschalters einerseits und die Sensor-Elektronik andererseits sind dabei vorzugsweise als elektronisch getrennte Schaltungen ausgeführt, die nur bei Bedarf und bei abgeschalteter Hochspannungsquelle miteinander verbunden werden.

Infolge der thermischen und elektrischen Ausstrahlung des Plasmas ist die Sensor-Elektronik in unmittelbarer Umgebung des Plasmabrenners hohen Temperaturen und starken elektronischen Stör-Emissionen ausgesetzt. Zur Bewältigung der Umgebungseinflüsse ist der Schutzschalter mehrstufig ausgebildet, wobei jeder Schutzstufe eine spezifische Funktion bezüglich der Beseitigung von Spannungs-Störgrößen (Transienten) und der Aufbereitung sauberer Signale zukommen kann. Bevorzugte Ausgestaltungen dieser spezifischen Funktionen werden im Folgenden näher erläutert.

Die erste Schutzstufe hat eine elektrische Verbindung zum Werkstück und ist vorzugsweise als Hochspannungsstufe für den Abbau von Störspannung mit mehr als 100 Volt ausgelegt, wobei sie mindestens eine Diode und einen Hochfrequenzfilter umfasst.

Diese Hochspannungsstufe liegt der Plasmazone am Nächsten. Sie dient in erster Linie zum Abbau hoher Überspannungen sowie hochfrequenter Störpotentiale. Zu diesem Zweck verfügt sie über eine oder mehrere Dioden und einen oder mehrere Filter für hohe Frequenzen (Tiefpass), wobei ausgangsseitig der Schutzstufe das Störpotential auf weniger als 50 Volt, vorzugsweise weniger als 36 Volt reduziert werden kann. Die Diode dient dabei zur Beseitigung oder Reduzierung des Transienten, der Tiefpass zur Bereinigung hochfrequenter Störgrößen..

Die erste Schutzstufe ist im Hinblick auf etwaige Transienten besonders robust ausgelegt und bevorzugt mit einem Schalter ausgestattet, der eine Verbindung zur Sensor-Elektronik ermöglicht. Dieser Schalter ist nur dann geschlossen, wenn Daten für die Abstandsmessung und -regelung transportiert werden. Der Schalter kann so massiv ausgelegt sein, beispielsweise in Form eines Relais oder eines Kippschalters, dass in geöffnetem Zustand eine Übertragung von Störgrößen grundsätzlich ausgeschlossen werden kann. Eine zuverlässige Vermeidung der Störgrößen erfordert jedoch eine beträchtliche Baugröße des Schalters, die in unmittelbarer Nähe des Plasmabrenners häufig unerwünscht ist. Alternativ dazu kann zu Gunsten einer möglichst kompakten Bauform der Schutzeinrichtung eine gewisse Überkopplung an Störimpulsen in Kauf genommen werden, wenn diese - wie bei der erfindungsgemäßen Schutzeinrichtung vorgesehen - in nachfolgenden Schutzstufen zuverlässig eliminiert werden können. Hinter dem Schalter befinden sich zwei separate Frequenzfilter, die einen Scheinwiderstand bilden.

Je nach Art und Umfang eines Störpotentials kann sich die erste Schutzstufe als zu träge erweisen. Daher ist zwischen der ersten Schutzstufe und der zweiten Schutzstufe vorteilhafterweise ein Scheinwiderstand in Form einer stromkompensierten Spule vorgesehen.

Ein nach Durchlauf der ersten Schutzstufe verbleibender Transient hat in der Regel ein Potential von weniger als 50 Volt (vorzugsweise weniger als 36 Volt). Dieser wird mittels der stromkompensierten Spule weiter reduziert, so dass ein zerstörungsfreier Betrieb der elektronischen Bauteile der zweiten Schutzstufe mit einer Betriebsspannung von beispielsweise 12 Volt, die von der Maschinensteuerung bereitgestellt wird, gewährleistet ist. Die zweite Schutzstufe umfasst vorzugsweise eine klassische Potentialtrennung mit mindestens einem DC/DC-Wandler und einem Optokoppler.

DC/DC-Wandler und Optokoppler der zweiten Schutzstufe bewirken eine Potentialtrennung zwischen dem Maschinenpotential und der elektronischen Steuereinheit der Abstandsregelung.

Es hat sich bewährt, zwischen der zweiten Schutzstufe und einer dritten Schutzstufe eine Versorgungsleitung für die elektrische Versorgung von Komponenten der Schutzstufen vorzusehen, wobei in der Versorgungsleitung ein vorzugsweise als LC-Glied ausgeführter Tiefpassfilter und eine Schutzdiode eingesetzt sind.

Der Tiefpassfilter dient zur weiteren Verringerung der frequenten Störung und die Schutzdiode zur weiteren Verringerung der Transienten.

Es hat sich gezeigt, dass frequente Störungen und Transienten auch von der Massepotentialseite in die Elektronik eindringen können. Die Störspannungen breiten sich dabei über die mit der Erdung (Masse) verbundenen Leitungen aus, und nicht über die üblichen Signal- und Versorgungsleitungen. Diese Problematik ergibt sich insbesondere dann, wenn - wie üblich - das zu bearbeitende Werkstück geerdet, also mit der Masse verbunden ist.

Um auch die von der Masseseite eindringenden Transienten abzubauen, umfasst die Schutzschaltung daher vorteilhafterweise eine oder mehrere Schutzstufen gegenüber Überspannung und Störfrequenzen umfasst, die von einem Massepol der elektrischen Spannungsversorgung ausgehen.

Für diesen Zweck sind bei einer bevorzugten Ausführungsform der erfindungsgemäßen Plasmaschneidmaschine in eine mit dem Massepol elektrisch verbundene Masseleitung, die zwischen der zweiten Schutzstufe und einer dritten Schutzstufe vorgesehen ist, ein vorzugsweise als LC-Glied ausgeführter Tiefpassfilter und eine Schutzdiode eingesetzt.

Die Signalübertragung über die Masseleitung zwischen der zweiten und der dritten Schutzstufe wird im Hinblick auf etwaige elektrische Störimpulse genauso so behandelt wie die Signalübertragung über die Versorgungsleitung zwischen zweiter und dritter Schutzstufe. Das bedeutet insbesondere, dass der Tiefpassfilter eine Glättung und Verringerung hochfrequenter Störimpulse und die Schutzdiode eine Verringerung der Transienten bewirken.

Die Schutzwirkung dieser Bauteil entfaltet sich, wenn die Störimpulse tatsächlich über eine entsprechend präparierte und geschützte Masseleitung laufen und nicht über andere Leitungen ausweichen können. Um dies zu gewährleisten, hat sich die Einrichtung einer sogenannten "floatenden Masse" bewährt. Dabei wird der Bezugspunkt des Massepotentials bei Null aufgehoben, so dass sich unabhängig vom Potential des Werkstücks (dem "Maschinenpotential") frei eine Vielzahl unterschiedlicher Massepotentiale je nach Störpotential und elektrischem Zustand frei einstellen können. An und für sich ist eine solche "floatende Masse" im Sinne einer definierten Signalverarbeitung unerwünscht. Bei der erfindungsgemäßen Schutzeirichtung entfaltet sie jedoch eine wesentliche Funktion, indem die Störpotentiale, die von der Masseseite kommen, verringert werden.

Insoweit stellen die zweite und dritte Schutzstufe eine Massepotentialschutzbeschaltung dar.

Eine weitere wesentliche Funktion der dritten Schutzstufe liegt darin, etwaige Transienten in einen definierten Spannungszustand umzusetzen. Hierzu sind insbesondere Scheinwiderstände vorgesehen, die schnelle Dioden und Kondensatoren umfassen.

Es hat sich bewährt, eine vierte Schutzstufe vorzusehen, die mit mehreren Scheinwiderständen ausgestattet und die mit der Schnittstelle zu der Maschinensteuerung verbunden.

Auch die Scheinwiderstände der vierten Schutzstufe haben die Funktion, etwaige Transienten in einen definierten Spannungszustand umzusetzen, so dass die die vierte Schutzstufe durchlaufenden Transienten ohne Gefahr für elektronische Bauteile der Maschinensteuerung und eine nennenswerten Störung von Signalen über die betreffende Schnittstelle an die Maschinensteuerung übermittelt werden können.

Vorteilhafterweise ist die Schnittstelle zu der Maschinensteuerung auch mit der elektronischen Steuereinheit für die Abstandsmessung verbunden.

Über diese Verbindung wird der elektronischen Steuereinheit von der Maschinensteuerung ein ungestörtes Niedrigspannungs-Signal zur Verfügung gestellt und die Durchführung der Erstfindung wird über diese Schnittstelle aktiviert.

Hinsichtlich des Betriebsverfahrens der erfindungsgemäßen Plasmaschneidmaschine wird die weiter oben angegebene technische Aufgabe erfindungsgemäß dadurch gelöst, dass die elektronische Steuereinheit des Abstandsensors die Bewegungseinheit für den Plasmabrenner so ansteuert, dass dieser auf das zu bearbeitende Werkstück aufsetzt, das Aufsetzen als elektrisches Signal von der Steuereinheit registriert und ein Referenzpunkt für die Abstandsmessung generiert wird, daraufhin die Bewegungseinheit so angesteuert wird, dass der Plasmabrenner in eine Arbeitsposition oberhalb des Werkstücks verbracht wird, und alsdann mittels der Zündeinrichtung auf hohem Spannungsniveau ein Zündvorgang ausgelöst wird, wobei eine vom Zündvorgang resultierende Störspannung mittels der mit dem Plasmabrenner bewegten Schutzeinrichtung abgebaut wird, wobei als Schutzeinrichtung eine elektronische Schaltung eingesetzt wird, die die elektronische Steuereinheit für den Abstandssensor sowie einen mehrere Schutzstufen umfassenden Schutzschalter zum Abbau der Störspannung sowie eine Schnittstelle zu einer Maschinensteuerung aufweist.

Das erfindungsgemäße Verfahren umfasst eine Abstandsregelung zwischen Werkstoff und Plasmabrenner, bei der die Erstwertfindung durch einen Kontakt zwischen Plasmabrenner und Werkstück erfolgt. Dadurch ergibt sich ein verlässlicher Referenzwert für die Abstandsmessung.

Für Abstandsmessung und -regelung ist eine Steuereinheit vorgesehen (hier auch als "Sensor-Elektronik" bezeichnet), die in unmittelbarer Nähe des Plasmabrenners angeordnet ist und mit diesem bewegt wird. Sie ist beispielsweise direkt am Brennerschaft oder an einem Querwagen montiert, mittels dem der Plasmabrenner horizontal verfahren wird. Im Vergleich zu einer in einem ortsfesten Schaltschrank untergebrachten Steuereinheit ergibt sich beim erfindungsgemäßen Betriebsverfahren durch die Nähe zur Messstelle eine schnellere Messwerterfassung und Datenübertragung und dadurch eine geringe Totzeit bei der Regelung.

Die Sensor-Elektronik ist Teil einer Schutzeinrichtung gegen Überspannung und anderer elektronischer Störungen, die durch den Zündvorgang ausgelöst werden. Dies ermöglicht es, die Erstwertfindung, die laufende Abstandsmessung als auch die Auswertung und Abstandsregelung vollständig innerhalb der Schutzeinrichtung abzuschließen, also Plasmabrenner oder in der Nähe desselben. Durch diese dezentrale Anordnung der Sensor-Elektronik ergeben sich die weiter oben anhand der erfindungsgemäßen Plasmaschneidmaschine erläuterten Vorteile.

Nachfolgend wird die Erfindung anhand von Ausführungsbeispielen und einer Zeichnung näher erläutert. Dabei zeigt im Einzelnen
- **Figur 1**: eine Ausführungsform der erfindungsgemäßen Plasmaschneidmaschine in schematischer Darstellung mit einem Plasmabrenner und einer Schutzeinrichtung mit Abstandsregelung, und
- **Figur 2**: ein schematisch vereinfachtes Blockschaltbild mit den Schutzstufen der Schutzeinrichtung und der Abstandsregelung.

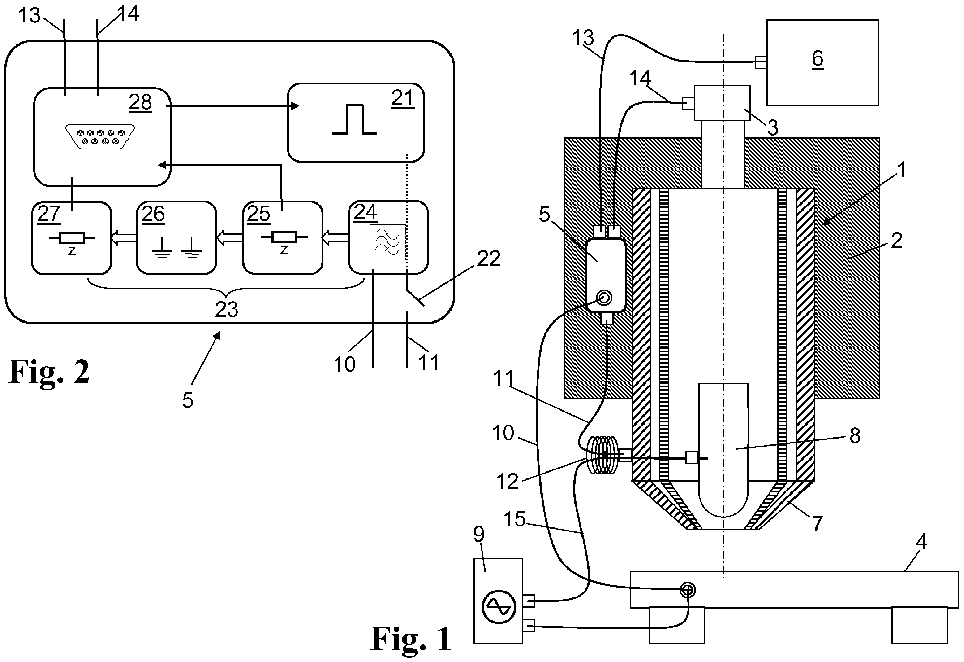

**Figur 1** zeigt schematisch einen Plasmabrenner 1 einer Plasmaschneidmaschine. Der Brenner 1 ist mittels eines schematisch angedeuteten Querwagens 2 in üblicher Weise in einer horizontalen Ebene und in vertikaler Richtung mittels einer Höhenverstelleinrichtung 3 verfahrbar. Die Erfassung des Abstandes zwischen dem Plasmabrenner 1 und dem zu bearbeitenden Werkstück 4 und die Steuerung der Höhenverstelleinrichtung 3 erfolgt über eine Sensor-Elektronik, die zusammen mit einer Schutzschaltung in einer Schutzeinrichtung 5 untergebracht ist. Diese ist am Querwagen 2 in unmittelbarer Nähe zum Plasmabrenner 1 montiert und wird mit diesem verfahren. Die Schutzeinrichtung 5, die weiter unten anhand Figur 2 näher erläutert ist, ist über eine Mess- und Steuerleitung 14 mit der Höhenverstelleinrichtung 3 verbunden.

Zur Einstellung, Überwachung und Regelung aller anderen Maschinenfunktionen und Prozesse ist eine zentrale Maschinensteuerung 6 vorgesehen, die in einem Schaltschrank an der Wand neben der Plasmaschneidmaschine fest installiert ist.

Der Plasmabrenner 1 besitzt eine Schneiddüse 7, die eine Austrittsöffnung für ein lonisierungsgas definiert und die eine Innen-Elektrode 8 umgibt. Die Schneiddüse 7 dient gleichzeitig als Elektrode der kapazitiven Abstandsmessung. Die Gegenelektrode wird vom Werkstück 4 gebildet, das auf dem Potential der Schaltungsmasse liegt.

Der freie Rand der Schneiddüsen-Austrittsöffnung dient außerdem als Hilfselektrode für die Zündung eines Hilfslichtbogens. Zu diesem Zweck ist die Schneiddüse 7 über eine abgeschirmte Hochspannungsleitung 15 mit einer Hochspannungsquelle 9 für 20 kV Wechselspannung verbunden.

Auf diese Weise ist zwischen der Schneiddüse 7 und dem Werkstück 4 ein elektrischer Hilfslichtbogen erzeugbar, der in einer einleitenden Phase des Schneidbetriebes die Ausbildung des eigentlichen Plasma-Schneidstrahls begünstigt. Der Plasma-Schneidstrahl brennt im stationären Betriebszustand zwischen der Innen-Elektrode 8 und dem Werkstück 4. Zu diesem Zweck ist auch die Innen-Elektrode 8 mit der Hochspannungsquelle 9 verbunden, die im Schneidbetrieb eine Arbeitsspannung von 300 V mit 30 kHz bereitstellt.

Der Schaltkreis der Schutzeinrichtung 5 liegt einerseits auf dem Potential der Schaltungsmasse (über die elektrische Leitung 10 zum Werkstück 4) und andererseits er ist über eine trennbare Nutzsignalleitung 11 mit dem Plasmabrenner 1 verbunden. Die Nutzsignalleitung 11 kann dabei über eine gewisse Strecke mit der Hochspannungsleitung 8 in einem gemeinsamen, in Figur 1 nur schematisch angedeuteten Schlauchpaket 12 verlaufen. Außerdem ist die Schutzeinrichtung 5 über eine weitere Nutzsignalleitung 13 für die Übertragung von 24-Volt Gleichspannung mit der zentralen Maschinensteuerung 6 verbunden.

Somit ist zwischen die vom Plasma-Plasmabrenner 1 kommende Nutzsignalleitung 11 und der zur Maschinensteuerung 6 führenden Nutzsignalleitung 13 die Schutzeinrichtung 5 geschaltet. Diese dient nicht nur zur Messung und Einstellung des Arbeitsabstandes, sondern sie wirkt für die Maschinensteuerung 6 und die Elektronik des Abstandssensors auch als Schutzschalter im Fall von Überspannungen und hochfrequenter Störspannungen aus den Leitungen 10 und 11, wie dies im Folgenden anhand **Figur 2** und in Verbindung mit einem Beispiel des erfindungsgemäßen Verfahrens näher erläutert wird.

In einer ersten Phase wird zur Erstwertfindung der Abstandsregelung die Schneiddüse 7 auf der Oberfläche des Werkstücks 4 aufgesetzt. Hierzu wird die Höhenverstelleinrichtung 3 von der Sensor-Elektronik 21 der Schutzeinrichtung 5 entsprechend angesteuert. Der Schalter 22 ist dabei geschlossen, so dass der Kontakt zwischen Schneiddüse 7 und Werkstück 4 als elektrisches Signal von der Sensor-Elektronik 21 erfasst werden kann. Aufgrund des Kontaktsignals wird der Plasmabrenner 1 mittels der Höhenverstelleinrichtung 3 in eine vorgegebene Arbeitsposition oberhalb des Werkstücks 4 verbracht.

In dieser Position wird in einer zweiten Phase mittels der Maschinensteuerung 6 ein Zündvorgang ausgelöst. Dabei wird mittels des Hochspannungsgenerators 9 zwischen der Innen-Elektrode 8 und dem Werkstück 4 eine Zündspannung von 20 kV angelegt, so dass eine Entladung in Form eines Zündlichtbogens entsteht.

Infolge des Zündlichtbogens wird das aus der Düsenaustrittsöffnung ausströmende Plasmagas soweit aktiviert, dass sich in der dritten Phase bei einer Betriebsspannung von 300 V und eine Frequenz von 30 kHz ein stabiler Plasma-Schneidstrahl zwischen der Innen-Elektrode 8 und dem Werkstück 4 bildet. Daraufhin wird der Schneidprozess gestartet, wobei die Messung und Regelung des Abstands zwischen Brenner 1 und Werkstück 4 mittels der Sensor-Elektronik 21 erfolgt, die mit einer Niedrigvoltspannung von 24 V gespeist wird.

Die hohe Spannung beim Zündvorgang kann in die Leitungen 10 beziehungsweise 11 überkoppeln und muss innerhalb kurzer Zeit und auf kurzer Strecke in der Schutzeinrichtung 5 abgebaut werden, um Schäden an elektronischen Bauteilen und Prozessstörungen zu vermeiden. Zu diesem Zweck verfügt die Schutzeinrichtung 5 über eine Schutzschaltung 23 mit insgesamt vier Schutzstufen 24, 25, 26 und 27.

In der ersten Schutzstufe 24 sind im Wesentlichen Dioden und Hochfrequenzfilter in Parallelschaltung vorgesehen. Dabei handelt es sich um Funktionselemente für den Abbau von Hochspannung von mehr als 100 Volt sowie hochfrequenter Störpotentiale. Ausgangsseitig der ersten Schutzstufe 24 liegt das Störpotential bei maximal 36 Volt.

Zwischen der ersten Schutzstufe 24 und der zweiten Schutzstufe 25 ist ein Scheinwiderstand vorgesehen, der stromkompensierte Spule und zwei Kondensatoren mit einer Kapazität von jeweils 47 nF umfasst, und der dazu dient, die Energie von nicht eliminierten Transienten der ersten Schutzstufe weiter zu reduzieren.

Die zweite Schutzstufe 25 bildet eine Potentialtrennung zwischen dem Maschinenpotential und der Sensor-Elektronik. Als wesentliche Funktionselemente sind t ein DC/DC-Wandler und ein Optokoppler. Der Optokoppler ist darüber hinaus mit der Sensor-Elektronik 21 verbunden. Bei Kontakt des Plasmabrenners mit dem Werkstück detektiert der Optokoppler einen Stromfluss und liefert diese Information an die Maschinensteuerung (zwecks Auslösung des weiter oben erläuterten Zündvorgangs).

Zwischen der zweiten Schutzstufe 25 und der dritten Schutzstufe 26 ist eine von der Maschinensteuerung kommende Versorgungsleitung vorgesehen. In diese Versorgungsleitung ist ein LC-Glied als Tiefpassfilter eingesetzt. Das LC-Glied ist zusätzlich mit einer Schutzdiode versehen, wodurch die Spannung auf 24V/DC begrenzt und eine störungsfreie Stromversorgung der elektronischen Komponenten der Schutzeinrichtung gewährleistet wird.

Da Transienten auch über die Masseleitung 10 in die Elektronik eindringen können, wird die gleiche Schutzanordnung - das heißt ein LC-Glied als Tiefpassfilter mit einer Schutzdiode zur Spannungsbegrenzung - auch in der Masseleitung 10 zwischen der zweiten Schutzstufe 25 und der dritten Schutzstufe 26 eingesetzt.

Die damit angestrebte Schutzwirkung der elektronischen Komponenten wird dadurch sichergestellt, dass die Stromversorgung in der zweiten Schutzstufe 25 mit einem floatenden Massepotential ausgeführt wird. Bei einer "floatenden Masse" wird das Massepotential von dem festen Bezugspotential (Null) getrennt, so dass es sich je nach Störpotential und elektrischem Zustand frei einstellen kann. Durch diese "floatende Masse" können Störpotentiale, die von der Masseseite kommen, entschärft und etwaige Transienten in einen definierten Spannungszustand umgesetzt werden.

Die dritte Schutzstufe 26 stellt insoweit eine Massepotentialschutzbeschaltung dar und sie dient andererseits dazu, etwaige Transienten in einen definierten Spannungszustand umzusetzen, um ein "sauberes" 24V/DC Nutzsignal und damit eine zuverlässige Funktion der elektronischen Komponenten der Schutzeinrichtung zu erreichen. Hierzu sind insbesondere Scheinwiderstände vorgesehen, die schnelle Dioden und Kondensatoren umfassen. Mit anderen Worten: Durch Sicherstellen einer sauberen Versorgungsspannung kann ein definierte und reproduzierbarer Zustand der Nutzsignale und eine betriebssichere Funktion der Schutzeinrichtung gewährleistet werden.

In der vierten Schutzstufe 27 werden die eingehenden Signale zur Weiterleitung an die Maschinensteuerung 6 aufbereitet. Es wird eine störungsfreie 24 Volt-Steuerspannung zur Verfügung gestellt. Diese Schutzstufe verfügt über Scheinwiderstände, die zur Bereitstellung der oben erläuterten floatenden Masse beitragen. Die vierte Schutzstufe 27 ist mit einer Schnittstelle 28 zur Maschinensteuerung 6 (Leitung 13) verbunden, die auch Teil der Sensor-Elektronik 21 ist und über die die Höhenverstelleinrichtung 3 angesprochen wird (Leitung 14).

## Patentansprüche

1. Plasmaschneidmaschine mit
(a) einem mittels einer Bewegungseinheit (3) bewegbaren Plasmabrenner (1),
(b) einem auf niedrigem Spannungsniveau ansteuerbaren Abstandssensor mit einer elektronischen Steuereinheit (21) zur Ermittlung des Abstandes zwischen einem zu bearbeitenden Werkstück (4) und dem Plasmabrenner (1),
(c) einer auf hohem Spannungsniveau ansteuerbaren Zündeinrichtung (8; 9), mittels der ein Zündvorgang auslösbar ist
(d) sowie einer mit dem Plasmabrenner (1) bewegten Schutzeinrichtung (5) zum Schutz der elektronischen Steuereinheit (21) gegen aus dem Zündvorgang resultierender Störspannung,
**dadurch gekennzeichnet, dass** die Schutzeinrichtung (5) eine elektronische Schaltung beinhaltet, die die elektronische Steuereinheit (21) für den Abstandssensor, einen mehrere Schutzstufen umfassenden Schutzschalter (23) zum Abbau der Störspannung sowie eine Schnittstelle (28) zu einer Maschinensteuerung (6) aufweist.

2. Plasmaschneidmaschine nach Anspruch 1, **dadurch gekennzeichnet, dass** eine erste Schutzstufe (24) eine elektrische Verbindung zum Werkstück (4) hat und als Hochspannungsstufe für den Abbau von Störspannung mit mehr als 100 Volt ausgelegt ist, die mindestens eine Diode und einen Hochfrequenzfilter umfasst.

3. Plasmaschneidmaschine nach Anspruch 1 oder 2, **dadurch gekennzeichnet, dass** zwischen der ersten Schutzstufe (24) und einer zweiten Schutzstufe (25) ein Scheinwiderstand in Form eine stromkompensierten Spule vorgesehen ist.

4. Plasmaschneidmaschine nach Anspruch 3, **dadurch gekennzeichnet, dass** die zweite Schutzstufe (25) eine Potentialtrennung mit mindestens einem DC/DC-Wandler und einem Optokoppler.

5. Plasmaschneidmaschine nach einem der Ansprüche 3 oder 4, **dadurch gekennzeichnet, dass** zwischen der zweiten Schutzstufe (25) und einer dritten Schutzstufe (26) eine Versorgungsleitung für die elektrische Versorgung von Komponenten der Schutzstufen vorgesehen ist, und dass in der Versorgungsleitung ein vorzugsweise als LC-Glied ausgeführter Tiefpassfilter und eine Schutzdiode eingesetzt ist.

6. Plasmaschneidmaschine nach einem der vorhergehenden Ansprüche, **dadurch gekennzeichnet, dass** die Schutzschaltung (23) eine oder mehrere Schutzstufen (24; 25; 26; 27) gegenüber Überspannung und Störfrequenzen umfasst, die von einem Massepol der elektrischen Spannungsversorgung ausgehen.

7. Plasmaschneidmaschine nach Anspruch 6, **dadurch gekennzeichnet, dass** zwischen der zweiten Schutzstufe (25) und einer dritten Schutzstufe (26) eine mit dem Massepol elektrisch verbundene Masseleitung vorgesehen ist, und dass in der Masseleitung ein vorzugsweise als LC-Glied ausgeführter Tiefpassfilter und eine Schutzdiode eingesetzt ist.

8. Plasmaschneidmaschine nach Anspruch 7 und einem der Ansprüche 3 bis 6, **dadurch gekennzeichnet, dass** in der zweiten Schutzstufe (25) ein erstes Massepotential und in der dritten Schutzstufe (26) ein zweites Massepotential erzeugt werden, die zusammen eine floatende Masse bilden.

9. Plasmaschneidmaschine nach Anspruch 8, **dadurch gekennzeichnet, dass** die dritte Schutzstufe (26) eine Massepotentialschutzbeschaltung ist, die mehrere Scheinwiderstände in Form von frequenzabhängigen Spulen sowie schnelle Dioden und Kondensatoren umfasst.

10. Plasmaschneidmaschine nach einem der vorhergehenden Ansprüche, **dadurch gekennzeichnet, dass** eine mit mehreren Scheinwiderständen ausgestattete vierte Schutzstufe (27) vorgesehen und mit der Schnittstelle (28) zu der Maschinensteuerung (6) verbunden ist.

11. Plasmaschneidmaschine nach einem der vorhergehenden Ansprüche, **dadurch gekennzeichnet, dass** die Schnittstelle (28) mit der elektronischen Steuereinheit (21) für die Abstandsmessung verbunden ist.

12. Verfahren zum Betreiben der Plasmaschneidmaschine nach einem der Ansprüche 1 bis 11, wobei die elektronische Steuereinheit (21) des Abstandsensors die Bewegungseinheit (3) für den Plasmabrenner (1) so ansteuert, dass dieser auf das zu bearbeitende Werkstück (4) aufsetzt, das Aufsetzen als elektrisches Signal von der Steuereinheit (21) registriert und ein Referenzpunkt für die Abstandsmessung generiert wird, daraufhin die Bewegungseinheit (3) so angesteuert wird, dass der Plasmabrenner (1) in eine Arbeitsposition oberhalb des Werkstücks (4) verbracht wird, und alsdann mittels der Zündeinrichtung (8; 9) auf hohem Spannungsniveau ein Zündvorgang ausgelöst wird, wobei eine vom Zündvorgang resultierende Störspannung mittels der mit dem Plasmabrenner (1) bewegten Schutzeinrichtung (5) abgebaut wird, wobei als Schutzeinrichtung (5) eine elektronische Schaltung eingesetzt wird, die die elektronische Steuereinheit (21) für den Abstandssensor sowie einen mehrere Schutzstufen (24; 25; 26; 27) umfassenden Schutzschalter (23) zum Abbau der Störspannung sowie eine Schnittstelle (28) zu einer Maschinensteuerung (6) aufweist.

## Claims

1. Plasma cutting machine comprising
(a) a plasma burner (1) that is configured to be moved by movement unit (3),
(b) a distance sensor that is configured to be actuated at a low voltage level and has an electronic control unit (21) determining the distance between a workpiece (4) to be worked and the plasma burner (1),
(c) an ignition device (8; 9) that triggers an ignition process when actuated at a high voltage level,
(d) and a protection device (5) for protecting the electronic control unit (21) against interference voltage resulting from the ignition process, said protection device (5) is moved with the plasma burner (1),
**characterized in that** the protection device (5) contains an electronic circuit that includes the electronic control unit (21) of the distance sensor, a protection switch (23) having a plurality of protection levels of reducing the interference voltage, and an interface (28) to a machine control (6).

2. Plasma cutting machine according to claim 1, **characterized in that** a first protection level (24) has an electrical connection to the workpiece (4) and is configured as a high-voltage level for reducing interference voltage with more than 100 V, said electrical connection comprising a diode and a highfrequency filter.

3. Plasma cutting machine according to claim 1 or 2, **characterized in that** an impedance in the form of a current-compensated coil is provided between the first protection level (24) and a second protection level (25).

4. Plasma cutting machine according to claim 3, **characterized in that** the second protection level (25) has a potential separation with at least one DC/DC converter and an optocoupler.

5. Plasma cutting machine according to any one of claims 3 or 4, **characterized in that** a supply line electrically supplying components of the protection levels is provided between the second protection level (25) and a third protection level (26), and that the supply line has inserted therein a low-pass filter, which is preferably designed as an LC member, and a protection diode.

6. Plasma cutting machine according to any one of the preceding claims, **characterized in that** the protection circuit (23) comprises one or plural protection levels (24; 25; 26; 27) against overvoltage and interference frequencies starting from a ground pole of the electrical voltage supply.

7. Plasma cutting machine according to claim 6, **characterized in that** a ground line which is electrically connected to the ground pole is provided between the second protection level (25) and a third protection level (26), and that the ground line has inserted therein a low-pass filter, which is preferably configured as an LC member, and a protection diode.

8. Plasma cutting machine according to claim 7 and one of claims 3 to 6, **characterized in that** a first ground potential is generated at the second protection level (25) and a second ground potential at the third protection level (26), which jointly form a floating ground.

9. Plasma cutting machine according to claim 8, **characterized in that** the third protection level (26) is a ground-potential protection wiring that comprises plural impedances in the form of frequency-dependent coils and fast diodes and capacitors.

10. Plasma cutting machine according to any one of the preceding claims, **characterized in that** a fourth protection level (27) that is equipped with plural impedances is provided and connected to the interface (28) to the machine control (6).

11. Plasma cutting machine according to any one of the preceding claims, **characterized in that** the interface (28) is connected to the electronic control unit (21) for providing distance measurement.

12. Method for operating the plasma cutting machine according to any one of claims 1 to 11, comprising actuating with the electronic control unit (21) of the distance sensor the movement unit (3) for the plasma burner (1) such that said burner is mounted on the workpiece (4) to be worked, recording the mounting as an electrical signal by the control unit (21) and generating a reference point for the distance measurement, whereupon the actuating of the movement unit (2) such that the plasma burner (1) is moved into a work position above the workpiece (4), and then triggering an ignition process using the ignition device (8; 9) at a high voltage level, wherein an interference voltage resulting from the ignition process is reduced using the protection device (5) moved with the plasma burner (1), wherein an electronic circuit is used as the protection device (5), said electronic circuit comprising the electronic control unit (21) for the distance sensor and a protection circuit (23) comprising a plurality of protection levels (24; 25; 26; 27) for reducing the interference voltage, and an interface (28) to a machine control (6).

## Revendications

1. Machine de découpe plasma, comprenant
(a) une torche à plasma (1) déplaçable au moyen d'une unité de déplacement (3),
(b) un capteur de distance pouvant être commandé à un faible niveau de tension, doté d'une unité de commande (21) électronique et destiné à déterminer la distance entre une pièce (4) à usiner et la torche à plasma (1),
(c) un moyen d'allumage (8 ; 9) pouvant être commandé à un niveau élevé de tension, au moyen duquel un processus d'allumage peut être déclenché
(d) ainsi qu'un moyen de protection (5) déplacé avec la torche à plasma (1), destiné à protéger l'unité de commande (21) électronique contre une tension perturbatrice résultant du processus d'allumage,
**caractérisée en ce que** le moyen de protection (5) comprend un circuit électronique, qui comporte l'unité de commande (21) électronique pour le capteur de distance, un disjoncteur de protection (23) comprenant plusieurs niveaux de protection destiné à éliminer la tension perturbatrice ainsi qu'une interface (28) avec une commande de machine (6).

2. Machine de découpe plasma selon la revendication 1, **caractérisée en ce qu'**un premier niveau de protection (24) possède une liaison électrique à la pièce (4) et est conçu comme niveau haute tension pour l'élimination d'une tension perturbatrice de plus de 100 volts, qui comprend au moins une diode et un filtre de haute fréquence.

3. Machine de découpe plasma selon la revendication 1 ou 2, **caractérisée en ce qu'**une impédance sous la forme d'une bobine à courant compensé est prévue entre le premier niveau de protection (24) et un deuxième niveau de protection (25).

4. Machine de découpe plasma selon la revendication 3, **caractérisée en ce que** le deuxième niveau de protection (25) comprend une séparation de potentiel dotée d'au moins un convertisseur à courant continu et un photocoupleur.

5. Machine de découpe plasma selon l'une des revendications 3 et 4, **caractérisée en ce qu'**une ligne d'alimentation pour l'alimentation électrique de composants des niveaux de protection est prévue entre le deuxième niveau de protection (25) et un troisième niveau de protection (26), et **en ce qu'**un filtre passe-bas réalisé de préférence sous la forme d'un élément LC et une diode de protection sont placés dans la ligne d'alimentation.

6. Machine de découpe plasma selon l'une des revendications précédentes, **caractérisée en ce que** le circuit de protection (23) comprend un ou plusieurs niveaux de protection (24 ; 25 ; 26 ; 27) contre la surtension et les fréquences perturbatrices, qui partent d'un pôle de masse de l'alimentation en tension électrique.

7. Machine de découpe plasma selon la revendication 6, **caractérisée en ce qu'**une ligne de masse raccordée électriquement au pôle de masse est prévue entre le deuxième niveau de protection (25) et un troisième niveau de protection (26), et **en ce qu'**un filtre passe-bas réalisé de préférence sous la forme d'un élément LC et une diode de protection sont placés dans la ligne d'alimentation.

8. Machine de découpe plasma selon la revendication 7 et une des revendications 3 à 6, **caractérisée en ce qu'**un premier potentiel de masse est généré dans le deuxième niveau de protection (25) et un deuxième potentiel de masse dans le troisième niveau de protection (26), qui forment ensemble une masse flottante.

9. Machine de découpe plasma selon la revendication 8, **caractérisée en ce que** le troisième niveau de protection (26) est un circuit de protection du potentiel de masse, qui comprend plusieurs impédances sous la forme de bobines dépendantes de la fréquence ainsi que des diodes à rétablissement rapide et des condensateurs.

10. Machine de découpe plasma selon l'une des revendications précédentes, **caractérisée en ce qu'**un quatrième niveau de protection (27) équipé de plusieurs impédances est prévu et raccordé à l'interface (28) avec la commande de machine (6)

11. Machine de découpe plasma selon l'une des revendications précédentes, **caractérisé en ce que** l'interface (28) est raccordée à l'unité de commande (21) électronique pour la mesure de la distance.

12. Procédé d'exploitation de la machine de découpe plasma selon l'une des revendications 1 à 11, l'unité de commande (21) électronique du capteur de distance commandant l'unité de déplacement (3) pour la torche à plasma (1) de telle sorte que celle-ci se positionne sur la pièce (4) à usiner, le positionnement étant enregistré par l'unité de commande (21) comme signal électrique et un point de référence étant généré pour la mesure de la distance, l'unité de déplacement (3) étant ensuite commandée de telle sorte que la torche à plasma (1) est transportée dans une position de travail au-dessus de la pièce (4), puis un processus d'allumage est déclenché au moyen du moyen d'allumage (8 ; 9) à un niveau élevé de tension, une tension perturbatrice résultant du processus d'allumage étant éliminée au moyen du moyen de protection (5) déplacé avec la torche à plasma (1), un circuit électrique étant utilisé comme moyen de protection (5), ledit circuit électrique comportant l'unité de commande (21) électronique pour le capteur de distance ainsi qu'un disjoncteur de protection (23) comprenant plusieurs niveaux de protection (24 ; 25 ; 26 ; 27) destiné à éliminer la tension perturbatrice ainsi qu'une interface (28) avec une commande de machine (6).
